# EUROPEAN PATENT SPECIFICATION

(11) **EP 1 197 361 B1**
(45) Date of publication and mention of the grant of the patent: **17.08.2005**
(21) Application number: 01122331.0
(22) Date of filing: 19.09.2001
(51) Int. Cl.: B60G 17/015, B62J 27/00, B62K 25/28

(54) **Motorcycle with active rear suspension unit providing improved braking**
Motorrad mit aktiver Hinterradfederung für verbessertes Bremsverhalten
Motocyclette avec suspension active de la roue arrière pour comportement au freinage amélioré

(30) Priority: 10.10.2000 IT MI002184
(43) Date of publication of application: 17.04.2002
(73) Proprietor: Ducati Motor Holding S.p.A., 40132 Bologna (IT)
(72) Inventor: Domenicali, Claudio, 40129 Bologna (IT); Preziosi, Filippo, 40012 Calderara Di Reno (IT)
(74) Representative: Ripamonti, Enrico, Dr. Ing.

(56) References cited:
- US-A- 4 568 101
- US-A- 4 775 025
- US-A- 5 205 572
- US-A- 5 816 357

## Description

The present invention relates to a motorcycle in accordance with the introduction to the main claim.

In a motorcycle, in particular in a sports motorcycle, two main factors are known to limit the obtainable deceleration: the first is the friction between the wheel tyre and the surface (for example of asphalt) on which the vehicle moves, and the second is the tendency of the vehicle to tilt forwards. In high-performance motorcycles, tilting represents the main limit. This tilting occurs when the resultant of the forces acting on the motorcycle barycentre during braking (i.e. the braking force and that deriving from the weight of the vehicle plus driver) encounters the support surface (or ground) at a point to the front of the point of contact of the front wheel with this surface. Tilting does not occur if this resultant encounters said surface between the points at which the front and rear wheels make contact with the ground.

With the known "geometries" of known motorcycle suspension units, in which the wheels are connected to the frame via usual elastic damper members (with the front unit comprising a reaction rod and possibly a rocker or similar member), during braking there is progressive transfer of the combined weight of the vehicle plus driver towards the front wheel. There is hence a front "sinking" effect of the motorcycle and a simultaneous extension of the rear suspension unit. The movement of each suspension causes the vehicle barycentre to shift, however the sum of these movements results in a substantial immovability of the barycentre (center of gravity); consequently if the resultant of the aforesaid forces when applied to this barycentre encounters the surface or ground to the front of the point of contact of the front wheel with this ground (which can happen during very intense braking, so-called "to the limit"), the rear wheel rises from the ground with consequent considerable motorcycle instability.

US 4,568,101, to which the preamble of the main claim refers, relates to an automatic suspension system for a vehicle which lowers the vehicle ride height when the vehicle is operated below a predetermined speed and when the vehicle is at rest so that the vehicle has a lower center of gravity for better balance and easier passenger boarding characteristics. The vehicle is elevated when it is operated above the predetermined speed to increase suspension travel and ground clearance. The raising and lowering of the suspension can also be varied depending on acceleration or deceleration characteristics or the combination thereof with vehicle speed.

An object of the present invention is to provide a motorcycle of high stability during braking, in which very sudden vehicle braking even at high speed can be obtained without risk of raising its rear wheel.

Another object is to provide a motorcycle of the aforesaid type which is reliable in use under all conditions.

These and further objects which will be apparent to the expert of the art are attained by a motorcycle in accordance with the accompanying claims.

The present invention will be better understood from the accompanying drawing, which is provided by way of non-limiting example and in which:
Figure 1 is a schematic illustration of the motorcycle according to the invention;
Figure 2 is a diagram of a rear suspension unit of the motorcycle of Figure 1 shown during normal unbraked use of the vehicle;
Figure 3 is a diagram of the suspension unit of Figure 2 shown during braking of the motorcycle of Figure 1;
Figure 4 is a schematic illustration of the hydraulic circuit associated with the suspension unit of Figures 2 and 3; and

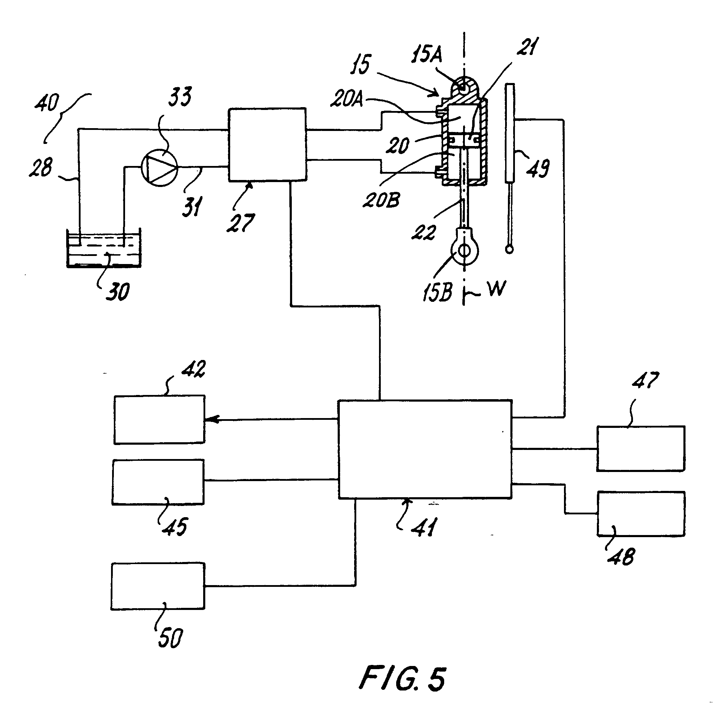

Figure 5 is a schematic illustration of the control circuit of the suspension unit of Figures 2 and 3.

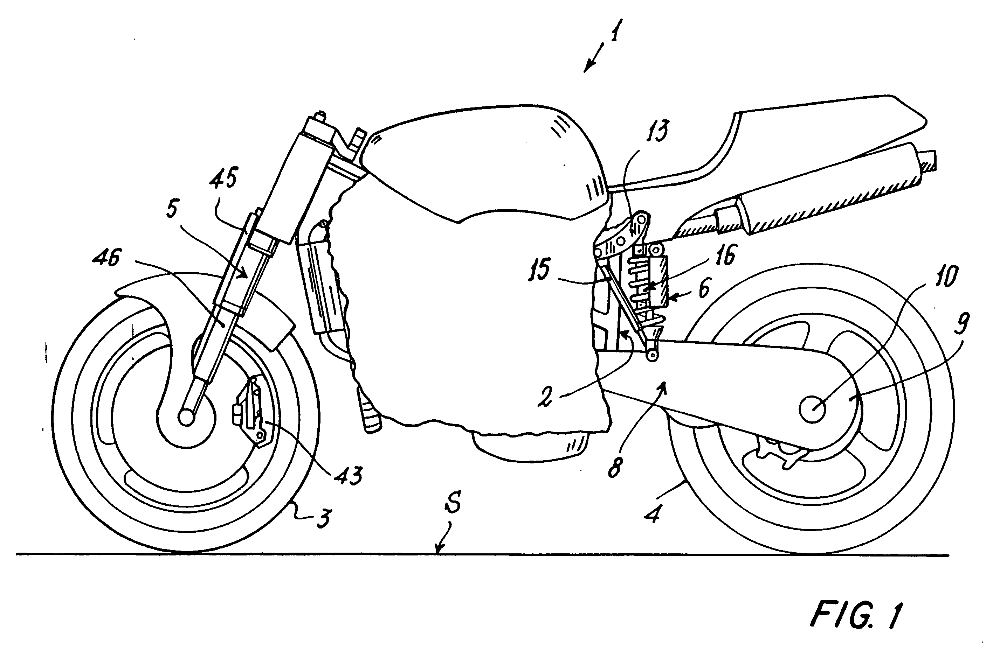

With reference to said figures, a motorcycle 1 (shown very schematically) comprises a streamlined frame 2, supported by a rear wheel 4 and a front wheel 3. A usual front suspension unit 5 is associated with the wheel 3, and a rear suspension unit 6 is associated with the wheel 4. The rear wheel 4 is associated with the frame 2 via one or more arms 8 (only one is shown in Figure 1). The rear suspension unit 6 is positioned between the arm 8 and the frame 2, for example a lattice frame. The arm 8 is secured at one end 9 to the hub 10 of the wheel 4 and at its opposite end is hinged at 12 to the frame 2.

In the described embodiment, the suspension unit 6 comprises a rocker 13 pivoted to a projection 14 rigid with the frame 2; to the opposite ends 13A and 13B of the rocker 13, there are pivoted respectively a hydraulic actuator 15 (replacing a usual rigid reaction rod) and an elastic damper member (or simply "damper") 16. The actuator 15 presents a longitudinal axis W, a first end 15A pivoted to the rocker 13 and a second end 15B pivoted on a pin 17 which secures it to the arm 8. One end 16A of the damper 16 is also pivoted on this pin.

The actuator 15 is of the hydraulic type and comprises a cylinder 20 within which a piston 21 slides, the cylinder being fixed to the rocker 13 and the piston being associated with a rod 22 connected to the pin 17. The position of the piston 21 within the cylinder 20 (of double acting type) defines in this latter two variable volume chambers 20A and 20B connected to conduits 23 and 24 respectively.

The conduit 23 is connected to a valve member or unit 27, preferably comprising at least one solenoid valve, connected to a reservoir 30 via a conduit 28. A further conduit 31 originating from the reservoir 30 is also connected to the solenoid valve via a filter 32, a pump 33 and unidirectional valves 34 and 35. An accumulator 37 is connected to the conduit 31 between the two valves. A fluid, for example oil, is present in the reservoir 30 and in the entire system 40 defined by the conduits 23, 28 and 31 and by the members connected to them; this system is totally independent of the other hydraulic systems of the vehicle. However the oil of said system can also be oil from the engine lubrication circuit (of which in this case the reservoir 30 would form part and to which the system 40 would be connected).

The pump 33 draws oil from the reservoir and feeds it to the accumulator 37, which is able to supply high flow rates (substantially instantaneously) to the actuator 15 when this is necessary.

The valve member or solenoid valve 27 is controlled by a control unit 41 able to modify the height of the motorcycle barycentre from the ground S only during particular braking situations in which, in the absence of the invention, the vehicle could raise the rear wheel 4 from the ground and, in the limit, tilt forwards. Such situations are in particular those involving prolonged braking. To be able to operate effectively, the unit 41 receives information from several sensors positioned on the motorcycle, and which can include: a sensor 42 for measuring the pressure of the front wheel 3 on the brake 43 (for example via a pressure sensor positioned in the braking circuit connected to the brake 43), a sensor 45 for determining the position of the fork 46 of the front suspension unit 5, a sensor 47 for determining the position of the rear wheel 4 relative to the ground by monitoring the rear suspension unit 6, a movement speed sensor 48, a sensor 49 measuring the position of the piston 21 within the cylinder 20 and a sensor 50 for measuring the degree of opening of the throttle valve (or measuring the degree of throttling of the engine intake duct). From the data originating from all or at least a part of these sensors (or measurement members), the unit 41 senses when the invention can be activated, or for how long the actuator 15 is to be operated and at what rate.

Various logics can be used on which the unit 41 bases its decision to activate the system; these include the following logics, causing the unit 41 to operate when:
a) the pressure of the front brake (measured by the sensor 42) exceeds a predetermined threshold pressure;
b) the front fork sinks more than a certain predetermined value (this measured by the sensor 45);
c) the case in which both the aforesaid conditions under points a) and b) occur;
d) the aforedescribed combinations in combination with a determination that the vehicle speed is greater than a predetermined value;
e) closing the throttle from accelerator fully open to fully closed within a time less than a certain predetermined value, possibly in combination with one or more of the aforedescribed conditions.

Various logics can be used on which the unit 41 bases its decision to extend the actuator 15 (to return to its normal position), including those based on the following measurements:
I) the pressure of the front brake (measured by the sensor 42) falls below a predetermined threshold pressure;
II) the amplitude sensor of the rear damper measures a compression thereof greater than a predetermined value;
III) the load on the rear wheel is greater than a predetermined value, measured by a sensor which measures the load acting on the actuator 15;
IV) the occurrence of two or more of the aforedescribed conditions;
V) the passing of a predetermined system intervention time.

The aim of all this is to achieve a lowering of the vehicle barycentre only simultaneously with the sinking of the fork 46, whereas when the vehicle is not under braking, or if the conditions for intervention of the unit 41 do not exist, the actuator 15 must remain in a completely extended and rigid position so as to behave as the usual reaction rod of a rear suspension unit of the state of the art.

It will now be assumed that the motorcycle 1 is to be used in accordance with one of the aforedescribed operating logics. It will also be assumed that it is in a position perpendicular to the ground S and that the driver is about to apply prolonged braking (for example because the vehicle, at high speed, is to confront a bend, for example during a competition). Under these conditions, the driver presses the usual brake lever to activate the vehicle front brake. Following this pressing action the sensor 42 feeds a signal to the unit 41 denoting that the driver is braking.

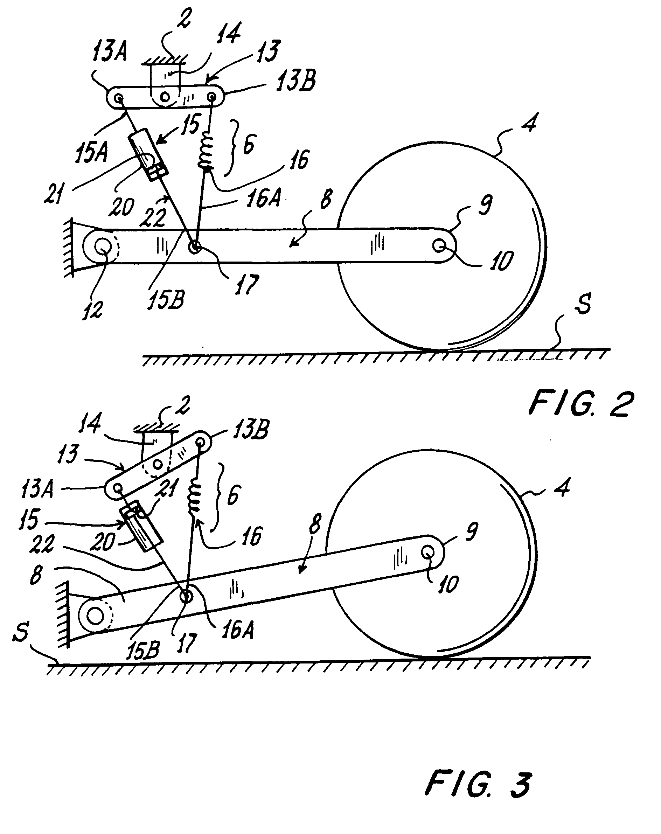

As a result of this action on the brake lever, the vehicle begins to brake and simultaneously the fork 46 begins to "sink". At the same time, the unit 41 (totally automatically) monitors the position of the suspension 5 via the sensor 45, and the vehicle speed. If (at the commencement of braking) the unit 41 senses that the braking pressure exceeds a predetermined threshold value and that the front suspension has compressed beyond a predefined threshold value, this unit instantaneously acts on the valve unit or solenoid valve 27 to enable the pressure of the oil of the circuit 40 to be released from the chamber 20A, whereas the chamber 20B remains under pressure. Following this, the actuator 15 yields along its longitudinal axis W so that its opposing ends 15A and 15B approach each other. In other words, the piston 21 of the actuator 15 moves from the position of Figure 2 to that of Figure 3, with the result that in the initial stage of braking, the residual weight on the rear wheel does not discharge to the ground via the rear tyre, but accelerates its movement downwards with consequent lowering of the motorcycle barycentre towards the ground S. As a result of this lowering, the resultant of the braking force and the weight force (vehicle weight plus driver weight) applied to the barycentre encounters the ground S between the points of contact of the wheels 3 and 4 with the ground, meaning that a braking force can be achieved which is higher than that which can be generated in those motorcycles without the present invention.

It should be noted that the lowering movement of the barycentre deriving from the movement of the piston 21 within the cylinder 20 is very fast (also because the vehicle moves its vertical position while along a straight portion of the ground S, hence the driver does not risk falling), whereas the opposite movement when the piston moves from the position of Figure 3 to that of Figure 2 (movement controlled by the unit 41 via the sensor 49 and obtained by suitable activation of the valve unit 27) is slow, said opposite movement being actuated when the motorcycle enters a bend or immediately before. The slow movement is provided in order not to alter the equilibrium of the vehicle.

Hence by virtue of the invention, high stability of a braking motorcycle can be achieved and the braking force acting on the vehicle front wheel be also increased without risk of tilting the motorcycle.

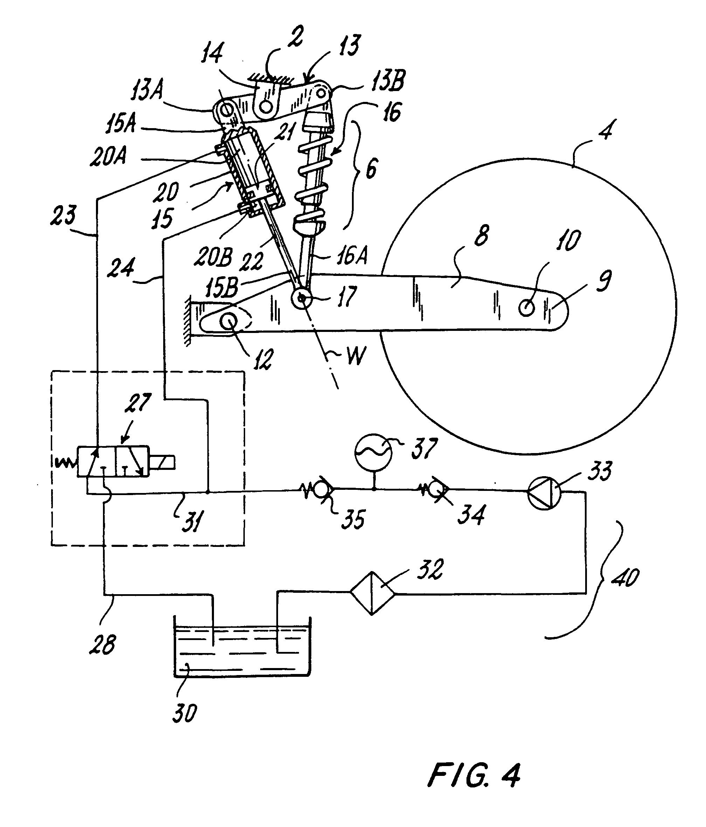

A preferred embodiment of the invention has been described. Others are however possible, such as one in which the form of the circuit 40 is different from that of Figure 4. Other variants are also to be considered as falling within the scope of the present invention, as defined by the appended claims.

## Claims

1. A motorcycle (1) comprising a frame (2) mounted on a front wheel (3) and on a rear wheel (4), each wheel (3, 4) operationally cooperating with a corresponding suspension unit (5, 6) connected to the frame (2), the wheels (3, 4) being able to rest on a support surface (S), the rear suspension unit (6) comprising, acting as a reaction rod, a member (15) having two opposing ends (15A, 15B), of which a first (15A) operationally cooperates with the frame (2) and the second (15B) operationally cooperates with the rear wheel (4), said member (15) being selectively yieldable along its longitudinal axis (W), the ends (15A, 15B) of said member (15) being selectively approachable to each other in order to obtain lowering of the barycentre of the motorcycle (1) towards the support surface (S) control means (41) being provided to act on said member (15) to modify its extension, said member (15) being a hydraulic actuator (15) which acts as a rigid reaction rod and which comprises a cylinder (20) within which there moves a piston (21) arranged to define within this cylinder (20) two variable-volume chambers, these chambers communicating with a hydraulic circuit (40) provided with means (27) for controlledly varying the pressure of the fluid present in said chambers (20A, 20B) and for enabling the piston (21) to move within the cylinder (20), said piston operationally cooperating with one chosen from said frame (2) and said rear wheel (4), said cylinder (20) operationally cooperating with the other of said frame (2) and said rear wheel (4), the means for varying the pressure of the fluid in the cylinder chambers (20A, 20B) being a valve unit (27) connected to and controlled by the means (41) which control the variation in the extension of the member acting as the reaction rod (15), said control means being a microprocessor unit (41) connected to a sensor (48) measuring the motorcycle speed, **characterised in that** the control unit (41) is connected to a sensor (42) sensing a braking command applied to the front wheel brake (43), to a sensor (45) measuring the sinking of the fork (46) of the front suspension unit (5), and to a position sensor (47) for the rear wheel (4) which senses when this latter rises from the ground (S), the lowering of the barycentre of the motorcycle enabling greater braking 1 of the vehicle (1) and greater vehicle stability during this braking.

2. A motorcycle as claimed in claim 1, **characterised in that** the microprocessor unit (41) is connected to a sensor (50) measuring the throttling of the motorcycle engine air intake duct.

3. A motorcycle as claimed in claim 1, **characterised in that** the microprocessor unit (41) is connected to a sensor (49) measuring the variation in the extension of the member acting as the reaction rod (15).

4. A motorcycle as claimed in claim 1, **characterised in that** the hydraulic circuit (40) forms part of the vehicle engine lubrication circuit.

5. A motorcycle as claimed in claim 4, **characterised in that** the hydraulic circuit (40) comprises a reservoir (30), a pumping member (33) and a fluid accumulator arranged to provide a substantially instantaneous high rate of pressurized fluid flow to the actuator (15) to suddenly modify its extension.

## Patentansprüche

1. Motorrad (1), aufweisend einen Rahmen (2), der an einem Vorderrad (3) und einem Hinterrad (4) angebracht ist, wobei jedes Rad (3, 4) mit einer entsprechenden Aufhängungseinheit (5, 6) betriebsmäßig zusammenwirkt, die mit dem Rahmen (2) verburiden ist, wobei die Räder (3, 4) auf einer Tragfläche (S) zu ruhen vermögen, wobei die hintere Aufhängungseinheit (6) ein als eine Reaktionsstange wirkendes Element (15) umfasst, das zwei gegenüberliegende Enden (15A, 15B) aufweist, von denen ein erstes Ende (15A) betriebsmäßig mit dem Rahmen (2) zusammenwirkt, während das zweite Ende (15B) betriebsmäßig mit dem Hinterrad (4) zusammenwirkt, wobei das Element (15) selektiv entlang seiner Längsachse (W) längungsfähig bzw. dehnbar ist, wobei die Enden (15A, 15B) des Elements (15) selektiv einander annäherbar sind, um ein Absenken des Schwerpunkts des Motorrads (1) in Richtung auf die Tragfläche (S) zu erzielen, wobei ein Steuermittel (41) vorgesehen ist, um auf das Element (15) zum Modifizieren dessen Längung bzw. Dehnung einwirkt, wobei das Element (15) ein Hydraulikstellorgan (15) ist, das als starre Reaktionsstange wirkt, und das einen Zylinder (20) umfasst, innerhalb welchen sich ein Kolben (21) bewegt, der so angeordnet ist, dass er innerhalb des Zylinders (20) zwei Kammern mit variablem Volumen festlegt, wobei diese Kammern mit einem Hydraulikkreis (40) zusammenwirken, der mit Mitteln (27) zum steuerbaren Variieren des Drucks des Fluids versehen ist, das in den Kammern (20A, 20B) vorhanden ist, und um den Kolben (21) in die Lage zu versetzen, sich innerhalb des Zylinders (20) zu bewegen, wobei der Kolben betriebsmäßig entweder mit dem Rahmen (2) oder dem Hinterrad (4) zusammenwirkt, wobei der Zylinder (20) betriebsmäßig mit dem anderen Element, dem Rahmen (2) oder dem Hinterrad (4) zusammenwirkt, wobei die Mittel zum Variieren des Drucks des Fluids in den Zylinderkammern (20A, 20B) als Ventileinheit (27) vorliegen, die mit den Mitteln (41) verbunden und durch diese gesteuert ist, die die Veränderungen der Längung bzw. Dehnung des Elements steuert, das als Reaktionsstange wirkt, wobei das Steuermittel eine Mikroprozessoreinheit (41) ist, die mit einem Sensor (48) verbunden ist, die die Motorradgeschwindigkeit ermittelt, **dadurch gekennzeichnet, dass** die Steuereinheit (41) mit einem Sensor (42) verbunden ist, der einen Bremsbefehl ermittelt, der an die Vorderradbremse (43) angelegt ist, mit einem Sensor (45), der das Absenken der Gabel (46) der vorderen Aufhängungseinheit (5) misst, und mit einem Positionssensor (47) für das Hinterrad (4), der ermittelt, wann dieses vom Untergrund (S) abhebt, wobei das Absenken des Schwerkraftzentrums des Motorrads ein stärkeres Bremsen des Fahrzeugs (1) und eine größere Fahrzeugstabilität während dieses Bremsvorgangs ermöglicht.

2. Motorrad nach Anspruch 1, **dadurch gekennzeichnet, dass** die Mikroprozessoreinheit (41) mit einem Sensor (50) verbunden ist, der die Drosselung des Motorradmotorluftansaugkanals misst.

3. Motorrad nach Anspruch 1, **dadurch gekennzeichnet, dass** die Mikroprozessoreinheit (41) mit einem Sensor (49) verbunden ist, der die Variation der Dehnung des Elements misst, das als Reaktionsstange (15) wirkt.

4. Motorrad nach Anspruch 1, **dadurch gekennzeichnet, dass** der Hydraulikkreis (40) einen Teil des Fahrzeugmotorschmierkreises bildet.

5. Motorrad nach Anspruch 4, **dadurch gekennzeichnet, dass** der Hydraulikkreis (40) einen Vorratsbehälter (30), ein Pumpelement (33) und einen Fluidsammelbehälter umfasst, die dazu ausgelegt sind, zu ermöglichen, dass eine im Wesentlichen momentane hohe Rate an Druckfluidströmung für das Stellorgan (15) bereitgestellt wird, um dessen Längung bzw. Dehnung schlagartig zu modifizieren.

## Revendications

1. Motocyclette (1) comportant un châssis (2) monté sur une roue avant (3) et sur une roue arrière (4), chaque roue (3, 4) coopérant opérationnellement avec un équipement de suspension correspondant (5, 6) relié au châssis (2), les roues (3, 4) pouvant être posées sur une surface de soutien (S), l'équipement de suspension arrière (6) comportant, agissant en tant que tige de réaction, un élément (15) ayant deux extrémités opposées (15A, 15B), dont une première (15A) coopère opérationnellement avec le châssis (2) et la seconde (15B) coopère opérationnellement avec la roue arrière (4), ledit élément (15) étant sélectivement ajustable le long de son axe longitudinal (w), les extrémités (15A, 15B) dudit élément (15) étant sélectivement rapprochables l'une de l'autre afin d'obtenir l'abaissement du barycentre de la motocyclette (1) vers la surface de soutien (S), des moyens de commande (41) étant prévus pour agir sur ledit élément (15) pour modifier son extension, ledit élément (15) étant un actionneur hydraulique qui agit en tant que tige rigide de réaction et qui comporte un cylindre (20) dans lequel se déplace un piston (21) disposé pour définir dans ce cylindre (20) deux chambres de volume variable, ces chambres communiquant avec un circuit hydraulique (40) muni de moyens (27) pour faire varier de façon contrôlée la pression du fluide dans lesdites chambres (20A, 20B) et pour permettre au piston (21) de se déplacer dans le cylindre (20), ledit piston coopérant opérationnellement avec soit ledit châssis (2) et soit ladite roue arrière (4) ledit cylindre (20) coopérant opérationnellement avec soit ledit châssis (2) et soit ladite roue arrière (4) les moyens pour faire varier la pression du fluide dans les chambres de cylindre (20A, 20B) étant un système de soupapes (27) connecté et commandé par les moyens (41) qui commandent la variation de longueur du membre agissant en tant que moyens de commande de tige de réaction (15), ledit moyen de commande étant un microprocesseur (41) branché à un détecteur (48) mesurant la vitesse de motocyclette **caractérisée en ce que** le système de commande (41) est branché à un détecteur (42) détectant une commande de freinage appliquée au frein de la roue avant (43), à un détecteur (45) mesurant l'enfoncement de la fourche (46) du système avant de suspension (5) et à un détecteur de position (47) de la roue arrière (4) qui détecte quand cette dernière se lève du sol (S), l'abaissement du barycentre de la motocyclette permettant un meilleur freinage 1 du véhicule (1) et une plus grande stabilité du véhicule pendant ce freinage.

2. Motocyclette selon la revendication 1, **caractérisée en ce que** le microprocesseur (41) est relié à un détecteur (50) mesurant le débit d'air à l'entrée d'air du moteur de motocyclette.

3. Motocyclette selon la revendication 1, **caractérisée en ce que** le microprocesseur (41) est branché à un détecteur (49) mesurant la variation de la longueur de l'organe agissant en tant que tige de réaction (15).

4. Motocyclette selon la revendication 1, **caractérisée en ce que** le circuit hydraulique (40) fait partie du circuit de lubrification de moteur de véhicule.

5. Motocyclette selon la revendication 4, **caractérisée en ce que** le circuit hydraulique (40) comporte un réservoir (30), un organe de pompage (33) et un accumulateur de liquide disposés pour fournir un régime élevé essentiellement instantané de débit de fluide pressurisé à l'actionneur (15) pour modifier soudainement sa longueur.
